# DEMANDE DE BREVET EUROPEEN

(11) **EP 0 609 143 A1**
(43) Date de publication de la demande: **03.08.1994**
(21) Numéro de dépôt: 94400165.0
(22) Date de dépôt: 26.01.1994
(51) Int. Cl.: H04N 1/44, H04L 9/32

(54) **Système et procédé de transmission de télécopies sécurisées**

(30) Priorité: 28.01.1993 FR 9300868
(71) Demandeur: FRANCE TELECOM, F-75015 Paris (FR); LA POSTE, F-92777 Boulogne Billancourt Cédex (FR)
(72) Inventeur: Le Corre, Hervé, F-14930 Eterville (FR); Grimault, Jean-Luc, F-14120 Mondeville (FR); Boudet, François, F-14320 Fontenay Le Marmion (FR)
(74) Mandataire: Dubois-Chabert, Guy

(57) **Abrégé**

L'invention concerne un système de transmission de télécopies sécurisées comprenant :
- un télécopieur émetteur (20) ;
- un télécopieur destinataire (23) ; et
- un serveur de télécopies recommandées (21).

L'invention concerne également un procédé de transmission de télécopies sécurisées.

## Description

### Domaine technique

La présente invention concerne un système et un procédé de transmission de télécopies sécurisées.

### Etat de la technique

Les points forts du service de télécopie sont la simplicité d'emploi, l'utilisation du réseau téléphonique public, et la transmission directe. Mais il existe un point faible : la sécurité. Ce dernier point exclut de conférer un statut juridique à un document transmis en télécopie.

En effet, les niveaux de sécurité offerts par les télécopieurs de l'art connu sont insuffisants et inadaptés à la demande de certains utilisateurs. Les besoins en matière de sécurité en télécopie sont multiples : confidentialité, authentification, intégrité, non-répudiation, détection de rejeu.

Les télécopieurs actuellement sur le marché n'offrent pas, par exemple, de réelle assurance d'intégrité, les altérations pouvant être dues à des incidents de transmission, de scannérisation, d'impression ou à des actes volontaires de falsification.

Ces télécopieurs n'offrent pas, non plus, de sécurité au cas de répudiation d'une télécopie par son destinataire. Une personne destinataire d'une télécopie peut nier, en effet, avoir reçu le document que l'émetteur certifie lui avoir transmis. Il est alors impossible à l'émetteur de prouver la mauvaise foi éventuelle du destinataire ou vice-versa au destinataire de prouver sa bonne foi en prouvant qu'il n'a effectivement rien reçu.

Des appareils de chiffrement ont été développés par divers constructeurs afin de remédier au manque de sécurité de transmission de télécopies, mais ils ne sont basés que sur le chiffrement et ne permettent pas une large utilisation, dans un groupe ouvert d'abonnés. De plus, ils nécessitent un échange préalable de clés.

L'invention a pour objet d'apporter une solution au problème de la répudiation d'une télécopie par son destinataire ou son émetteur.

### Exposé de l'invention

L'invention concerne, tout d'abord, un système de transmission de télécopies sécurisées comprenant :
- un télécopieur émetteur ;
- un télécopieur destinataire ; caractérisé en ce qu'il comprend un serveur de télécopies recommandées.

Avantageusement, ce système de transmission comprend au moins un télécopieur sécurisé comportant :
- un organe de contrôle ;
- un module de communication ;
- un module interface utilisateur qui permet d'établir un dialogue avec l'utilisateur ;
- un module de sécurité, qui permet la production et la vérification de signatures numériques et la lutte contre le rejeu, comportant par exemple un lecteur de carte à mémoire ;
- éventuellement un module de chiffrement et de déchiffrement.

L'invention concerne, également, un procédé de transmission sécurisée avec avis de "télécopie recommandée", utilisant un serveur de télécopies, ledit procédé comprenant les étapes suivantes :
. une étape d'envoi sécurisé du document à télécopier par le télécopieur émetteur au serveur en lui donnant le nom du destinataire ;
. une étape d'envoi par le serveur au destinataire d'un avis de télécopie "recommandée" qui comporte un numéro de référence ;
. une étape de rappel du serveur par le destinataire et d'authentification auprès de lui en lui demandant l'envoi du document sur un télécopieur déterminé ;
. une étape d'authentification du destinataire par le serveur, d'envoi dudit document au télécopieur déterminé, et d'envoi d'un "accusé d'émission" au terminal émetteur.

L'invention permet donc d'obtenir un service de "télécopie recommandée" au moins équivalent au service postal de "lettre recommandée", et présentant les mêmes avantages que celui-ci, notamment en ce qui concerne la sécurité des échanges.

### Brève description des dessins

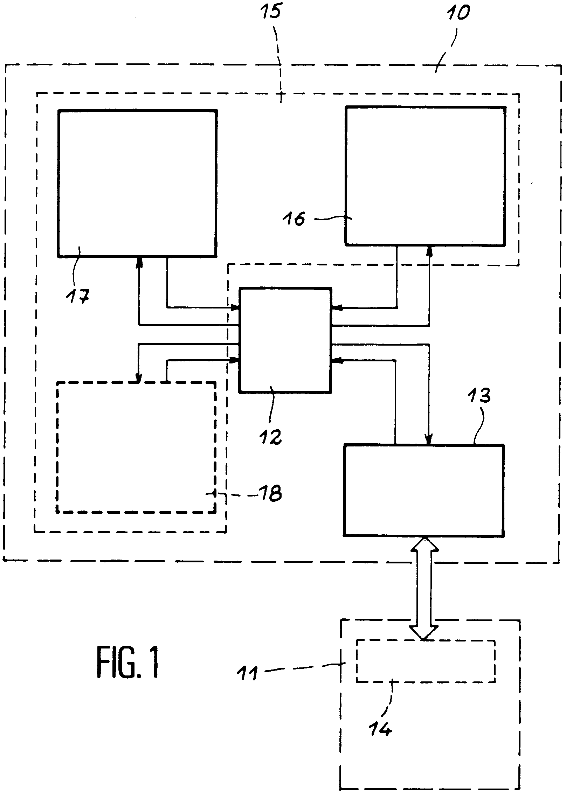

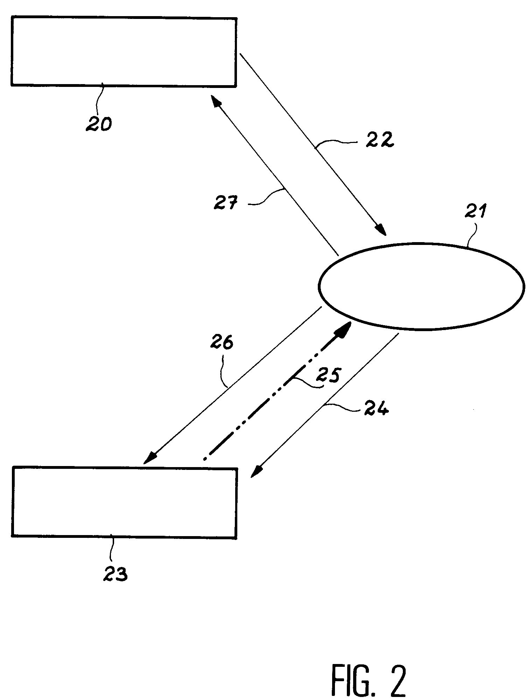

- La figure 1 illustre un télécopieur comprenant un dispositif de sécurisation de transmission de télécopies ;
- le figure 2 illustre le système de transmission de télécopies de l'invention.

### Exposé détaillé des modes de réalisation

La figure 1 illustre la liaison entre deux télécopieurs émetteur et destinataire 10 et 11. Le premier télécopieur 10 comprend un organe de contrôle 12 comportant une mémoire de masse et un module de communication 13 qui peut communiquer avec un module de communication 14 interne au second télécopieur 11.

Le premier télécopieur 10 comprend, de plus, un dispositif de sécurisation 15, qui comprend :
- un module interface utilisateur 16 qui permet le dialogue avec celui-ci ;
- un module de sécurité 17 qui permet la production et la vérification de signatures numériques et la lutte contre le rejeu, et qui peut comporter un lecteur de carte à mémoire apte à lire une telle carte, propre à chaque utilisateur (ou groupe d'utilisateurs), le rejeu étant une fraude consistant à réémettre, parfois à l'insu du véritable émetteur, un document vers un même destinataire sans que celui-ci ne puisse s'en apercevoir.

Ce dispositif 15 peut comprendre en outre :
- un module de chiffrement et de déchiffrement 18 qui n'existe que lorsque le premier télécopieur 10 a besoin de confidentialité en mode émission.

Ce dispositif 15 peut être un dispositif autonome destiné à compléter un télécopieur classique, ou un module interne à un télécopieur appartenant à une nouvelle génération de télécopieurs dits "sécurisés". Dans la suite de la description on appellera indifféremment "télécopieur sécurisé", un terminal de nouvelle génération ou un terminal classique complété par le dispositif de sécurisation gérant entre autres le mode correction d'erreur.

Pour envoyer des télécopies sécurisées, les télécopieurs émetteurs doivent être des "télécopieurs sécurisés".

L'invention concerne plus particulièrement un système de transmission de télécopies sécurisées comprenant un télécopieur émetteur, un télécopieur destinataire et un serveur de "télécopies recommandées". Avantageusement l'un (ou les deux) télécopieur(s) est (ou sont) du type décrit ci-dessus.

La mise en oeuvre d'un tel système ne peut se faire que par l'utilisation d'un serveur d'autorité reconnue.

Le procédé de transmission sécurisée avec avis de "télécopie recommandée", utilisant le serveur de télécopies, comprend les étapes suivantes :
. le télécopieur émetteur 20 envoie (liaison 22) le document à télécopier au serveur 21 en lui donnant le nom du destinataire, cette transmission émetteur-serveur s'effectuant de façon sécurisée ;
. le serveur 21, qui gère le dialogue avec le destinataire 23, envoie (liaison 24) à celui-ci un avis de télécopie "recommandée" qui comporte un numéro de référence ;
. le destinataire 23 rappelle (liaison 25) le serveur par liaison téléphonique, minitel ou télécopie avec système de reconnaissance de caractères, et s'authentifie auprès de lui en lui demandant l'envoi du document sur un télécopieur déterminé ;
. le serveur 21 authentifie le destinataire, envoie (liaison 26) ledit document au télécopieur déterminé, et envoie (liaison 27) un accusé de réception au terminal émetteur 20.

Le fonctionnement du procédé est donc le suivant.

Un utilisateur A possède un télécopieur "sécurisé" tel que défini ci-dessus. Il veut transmettre une "télécopie recommandée", chiffré ou non, à un destinataire. Il transmet alors son document signé et éventuellement chiffré au serveur, en indiquant l'identifiant du destinataire B (abonné au service de télécopie recommandée car le destinataire B doit posséder sa carte et ses clés de signature et éventuellement de chiffrement).

Le serveur envoie alors un "avis de télécopie recommandée" sur le télécopieur attribué au destinataire B.

Afin de prendre connaissance du document, ce destinataire B appelle le serveur par téléphone à fréquence vocale, Minitel, un système basé sur la reconnaissance de caractères ou tout autre système permettant l'authentification et s'authentifie. Le serveur vérifie l'identité de ce destinataire B et la conformité de sa signature. Le destinataire B indique au serveur le numéro du télécopieur sur lequel il désire que le document lui soit transmis, si celui-ci n'est pas son télécopieur "habituel". Le serveur retrouve le document et le transmet. Le serveur envoie à l'utilisateur A un "accusé de transmission" contenant l'heure et la date de première remise du document. Le serveur garde en mémoire des informations dites "sécuritaires" ainsi que toute anomalie dans la procédure, ce qui peut faire foi en cas de litige. Ces informations "sécuritaires" comprennent par exemple la date et l'heure du début de transmission du document, le nombre de pages transmises, l'identifiant des personnes émettrice et destinataire, l'aléa ayant permis de générer les signatures..., ces informations étant numériquement signées ; ces signatures étant également conservées dans le serveur.

Le serveur peut assurer la notarisation, c'est-à-dire un archivage sûr et à long terme, de la totalité du document échangé, si l'émetteur en fait la demande.

Après avoir reçu l'avis de télécopie recommandée, le destinataire B dispose, par exemple, de quinze jours pour le retirer auprès du serveur. Si le destinataire B n'a pas retiré le document avant l'expiration de ce temps, un avis de non transmission est envoyé à l'émetteur.

Une fois le document transmis au destinataire B, il reste disponible, par exemple, pendant une semaine dans le serveur. Ainsi, le destinataire a la faculté de demander sa réémission si un problème a eu lieu lors de la première transmission. Après quoi le document est détruit ou archivé. Lors d'une demande de réémission de document, le destinataire B doit à nouveau appeler le serveur et s'authentifier auprès de lui.

## Revendications

1. Système de transmission de télécopies sécurisées comprenant :
- un télécopieur émetteur (20) ;
- un télécopieur destinataire (23) ; caractérisé en ce qu'il comprend un serveur de "télécopies recommandées" (21).

2. Système de transmission selon la revendication 1, caractérisé en ce qu'il comprend au moins un télécopieur sécurisé comprenant :
- un organe de contrôle (12) ;
- un module de communication (13) ;
- un module interface utilisateur (16) qui permet d'établir un dialogue avec l'utilisateur ;
- un module de sécurité (17) qui permet la production et la vérification de signatures numériques, et la lutte contre le rejeu.

3. Système selon la revendication 2, caractérisé en ce que le module de sécurité (17) comporte un lecteur de carte à mémoire.

4. Système selon la revendication 2, caractérisé en ce qu'il comprend un module de chiffrement et de déchiffrement (18).

5. Procédé de transmission sécurisée avec avis de "télécopie recommandée", utilisant un serveur de télécopies comprenant les étapes suivantes :
. une étape d'envoi sécurisé (22) du document à télécopier par le télécopieur émetteur (20) au serveur (21) en lui donnant le nom du destinataire ;
. une étape d'envoi (24) par le serveur au destinataire d'un avis de "télécopie recommandée" qui comporte un numéro de référence ;
. une étape de rappel (25) du serveur par le destinataire (23) et d'authentification auprès de lui en lui demandant l'envoi du document sur un télécopieur déterminé, le document restant à la disposition du destinataire pendant un temps prédéfini par le système ;
. une étape d'authentification du destinataire par le serveur, d'envoi (26) dudit document au télécopieur déterminé, et d'envoi (27) d'un accusé d'émission au terminal émetteur.
